Europäisches Patentamt

European Patent Office

Office européen des brevets

(19)

(11) **EP 1 254 940 A1**

(12)

# EUROPEAN PATENT APPLICATION
published in accordance with Art. 158(3) EPC

(43) Date of publication:
 **06.11.2002 Bulletin 2002/45**

(51) Int Cl.⁷: **C09K 3/18**, C09K 3/00,
 C09D 5/00, C09D 139/00,
 C09D 163/00

(21) Application number: **01900762.4**

(22) Date of filing: **15.01.2001**

(86) International application number:
 **PCT/JP01/00196**

(87) International publication number:
 **WO 01/053427 (26.07.2001 Gazette 2001/30)**

(84) Designated Contracting States:
 **AT BE CH CY DE DK ES FI FR GB GR IE IT LI LU MC NL PT SE TR**
 Designated Extension States:
 **AL LT LV MK RO SI**

(30) Priority: **17.01.2000 JP 2000008235**

(71) Applicant: **NIHON PARKERIZING CO., LTD.**
 **Chuo-ku, Tokyo 103-0027 (JP)**

(72) Inventors:
 • **NAKADA, Kazuya, Nihon Parkerizing Co., Ltd.**
  **Chuo-ku, Tokyo 103-0027 (JP)**
 • **KAWAGUCHI, Motoya**
  **Nihon Parkerizing Co., Ltd.**
  **Chuo-ku, Tokyo 103-0027 (JP)**

(74) Representative: **Wise, Stephen James et al**
 **c/o RAWORTH, MOSS & COOK**
 **36 Sydenham Road**
 **Croydon, Surrey CR0 2EF (GB)**

(54) **TREATING AGENT FOR IMPARTING HYDROPHILICITY AND HIGH CORROSION RESISTANCE, HYDROPHILIZING FLUID, AND METHOD OF HYDROPHILIZING**

(57) A hydrophilizing agent which imparts corrosion resistance and hydrophilicity to a metal surface, characterized by comprising: (a) a hydrophilic polymer which is a copolymer of N-vinylacetamide with a polymerizable monomer having a COOX group (wherein X means hydrogen, an alkali metal atom, or an ammonium salt); (b) an organic crosslinking agent; and (c) at least one compound of metal selected among titanium, vanadium, chromium, manganese, cobalt, zinc, zirconium, molybdenum, cerium, and tungsten.

EP 1 254 940 A1

**Description**

Technical Field

The present invention relates to a novel hydrophilization agent, hydrophilization liquid, and hydrophilization method, which can impart improved hydrophilicity and high corrosion-resistance on the surface of metallic material, such as aluminum, aluminum-alloy, copper, copper-alloy, stainless steel and the like, particularly in a case where these materials are used for a heat exchanger.

Background Technique

Generally, most heat exchangers made of metallic material, such as an aluminum-containing metallic material, are so designed that their heat-dissipating and cooling portions have surface area as large as possible to enhance the heat-dissipating and cooling performance. In addition, the inter-fin space is extremely narrow to minimize size of the heat exchanger. Therefore, when an evaporator is operated, moisture in the atmosphere condenses on the fin surface. The condensed water tends to form water drops which fill the fin gaps (clogging), when the hydrophilicity of the fin surface is poor. As a result, ventilation resistance is increased, which reduces the heat-exchanging efficiency. And, such problems arise as power loss, generation of noise, and scattering of water drops with the air stream to the downstream side.

In addition, the fundamental construction of most heat exchangers are tubes and fins which play the role in heat dissipation. These tubes and fins are mainly bonded by soldering. One of the most serious problems of corrosion in the heat exchanger results in the leakage of heat transfer media due to pitting corrosion (piercing corrosion) of the tubes. Since this is a vital damage for the heat exchanger, various countermeasures have been taken. For example, according to one method the natural potential of fins is rendered less noble than that of the tubes, based on the concept of protecting the tubes by means of sacrifice-corroding the fins. Also, according to one method the tubes themselves are provided with a sacrifice-corrosion portion. Although special consideration in terms of the material is made for the anti-corrosion of the heat exchanger made of aluminum alloy as described above, such measure is in many cases unsatisfactory under the circumstances in which the heat exchanger is put into practical use.

Several methods proposed and implemented to prevent the problems described above reside in the hydrophilization of the fin surfaces so as to prevent the water drops from filling the space between the fins, and hence improving the wettability, and also adding an anti-corrosion agent into the resultant hydrophilic film so as to impart to the film not only hydrophilicity but also corrosion resistance.

As to such surface-treating methods, for example, Japanese Unexamined Patent Publication (kokai) No. 6-116527 discloses a hydrophilization agent of the metallic surface, which ins an acrylic-acid polymer as a film-forming component, a vanadium compound as cross-linking agent, and a silica source as the hydrophilizing component. Although this film has improved hydrophilicity, the resistance to solubility in water is unsatisfactory. It is, therefore, difficult to sustain the corrosion resistance for a long period of time. In addition, there is a problem unsolved regarding offensive odor.

In addition, Japanese Unexamined Patent Publication (kokai) No.6-322552 discloses a hydrophilization surface-treating agent, which contains 5 ~ 25 parts by weight of sodium salt and/or potassium salt of carboxymethylcellulose, from 25 ~ 50 parts by weight of ammonium salt of carboxymethylcellulose, and 25 ~ 70 parts by weight of N-methylolacrylamide. It is disclosed to use the hydrophilization surface-treating agent mentioned above for a hydrophilization surface-treating bath and a surface-treating method of aluminum material. It is also disclosed to further include from 0.6 ~ 9 parts by weight of a zirconium compound in terms of Zr. The persistence of the hydrophilicity and corrosion resistance for a long period of time of the film formed by this method are unsatisfactory.

In addition, Japanese Unexamined Patent Publication No. 7-102189 (kokai) discloses a hydrophilization treating agent, which contains, as the main components, an aqueous macromolecule compound having 10% by weight or more of a polyoxyalkylene chain in terms of solid matter, and at least one aqueous resin selected from (a) unaaturated polymerizable monomer or unsaturated polymerizable aqueous natural macromolecule compound containing a carboxyl group and/or hydroxide group, (b) a natural macromolecule compound containing a carboxyl group and/or hydroxide( group or its derivative, (c) aqueous alkyd resin, (d) aqueous maleinated oil, (e) aqueous polyester resin. (f) aqueous polybutadiene resin, (g) aqueous polyamide resin, (h) aqueous epoxy resin, (i) aqueous polyurethane resin, (j) aqueous phenol resin, (k) aqueous amino resin, and (I) aqueous inorganic cross-linking agent (compound of Cr, Ti, Al, Zn, Zr or the like). However, the persistence of the hydrophilicity of the film formed by this method is poor.

As is described above, such hydrophilization agent which enables improved persistence of hydrophilicity and corrosion resistance to be imparted to a heat exchanger has not been established at present

The present invention solves the above-mentioned problems involved in the prior art. Specifically, the present invention provides a hydrophilization agent, hydrophilization liquid, and hydrophilization method, which can impart improved hydrophilicity and high corrosion resistance on the surface of metallic materials, the raw material of which is aluminum, aluminum alloy, copper, copper alloy, stainless steel and the like.

Disclosure of Invention

The present inventors exhaustively considered measures for solving the problems involved in the prior art mentioned above. As a result, it was newly found that a film having improved hydrophilicity and corrosion resistance can be formed on the surface of metallic material by using a hydrophilization agent and hydrophilization liquid, which contains a hydrophilic polymer, that is, a copolymer of N-vinylacetamide and a polymerizable monomer having a COOX group (in the formula, X means hydrogen atom, alkali metal atom or ammonium salt), an organic cross-linking agent, and a metal compound. As a result, the present invention has been completed. The present invention has thus been completed.

Namely, the hydrophilization agent according to the present invention is characterized in that it contains, as the essential components, (a) a hydrophilic polymer, that is, a copolymer of N-vinylacetamide and a polymerizable monomer having a COOX group (in the formula, X means hydrogen atom, alkali metal atom or ammonium salt), (b) an organic cross-linking agent, and (c) a metal compound of at least one compound selected from Ti, V, Cr, Mn, Co, Zn, Zr, Mo, Ce and W. In the hydrophilic polymer (a) mentioned above, the ratio of the N-vinylacetamide and the polymerizable monomer having a COOX group (in the formula, X means hydrogen atom. alkali metal atom or ammonium salt) is preferably within the weight ratio of 95 : 5 ~ 20 : 80. The cross-linking agent (a) mentioned above is preferably an epoxy compound.

In addition, at least one additive selected from the group consisting of an anti-bacteria/mildew agent, a surfactant and a thickening agent is preferably further contained. In addition. 0.1 ~ 200 parts by weight of the cross-linking agent (b) and 1 ~ 200 parts by weight of the metal compound(c) are blended at a weight ratio relative to 100 parts by weight of the hydrophilic polymer (a) mentioned above.

Next, the hydrophilization liquid of the present invention is characterized in that it contains the above-mentioned hydrophilization agent at a concentration of from 1 ~ 100 g/L. In addition, the hydrophilization method of the present invention is characterized in that the hydrophilization agent or hydrophilization liquid mentioned above is deposited on the surface of the metallic material and is dried to form the hydrophilizing film.

The constitution of the present invention is described hereinafter in detail.

The hydrophilic polymer (a), which is an essential component of the hydrophilization agent or hydrophilization liquid of the present invention, has an effect to impart hydrophilization- persistence and to suppress the generation of offensive odor. A polymerizable monomer, which is copolymerized with the N-vinylacetamide in the hydrophilic polymer (a) is not particularly limited, provided that it is a polymerizable organic acid having a COOX group (in the formula, X means hydrogen atom, alkali metal atom or ammonium salt). For example, itaconic acid, maleic acid, maleic acid anhydride, crotonic acid, acrylic acid, (metha) acrylic acid, or their salts are listed. Among them, acrylic acid, (metha) acrylic acid and their salts are preferred. Particularly, acrylic acid and/or its alkali metal or ammonium salts are preferred from the viewpoint of resistance to solubility in water and the like. As such compounds, acrylic acid, sodium acrylate, potassium acrylate, ammonium acrylate are listed. One or more of these compounds can he used.

In the hydrophilic polymer (a), that is, a copolymer of N-vinylacetamide and a polymerizable monomer having a COOX group (in the formula, X means hydrogen atom, alkali metal atom or ammonium salt), the weight ratio of N-vinylacetamide and the polymerizing monomer is preferably 95 : 5 ~ 20 80, more preferably 90 : 10 ~ 30 : 70. furthermore preferably 70 : :30 ~ 50 : 50. When the polymerizable monomer is less than 95 : 5 of weight ratio, that is, the amount of one polymerizable monomer is small, the film formed is of poor resistance to solubility in water. On the other hand, when the polymerizable monomer is more than 20 : 80, that is, a large amount of the polymerizable monomer, the hydrophilization persistence is lowered.

The organic cross-linking agent (b), which is an essential component of the hydrophilization agent and hydrophilization liquid of the present invention, is used to fix the hydrophilic polymer (a) in the hydrophilizing film formed. That is, this organic cross-linking agent (b) plays the role of binder in the hydrophilizing film and prevents solution and removal of, the hydrophilic polymer. As a result, improved hydrophilicity, resistance to solubility in water and suppression of offensive odor can be ensured for a long period of time. A film is formed by the hydrophilization agent or the hydrophilization liquid, in which the anti-bacteria agent and/or the anti-mildew agent is added. Premature solution of the anti-bacteria agent and/or the anti-mildew agent from this film is suppressed. It is, therefore, believed that improved anti-bacteria and anti-mildew effects are provided.

The organic cross-linking agent (b) is not particularly limited to its kind, provided that an organic compound can be cross-linked with the hydrophilic polymer (a). There is no particular limitation regarding the liquid state such as colloid dispersion, emulsion and the like. There is no particular limitation regarding the ionic state such as nonionic anionic and cationic states. As the organic cross-linking agent, an epoxy compound such as polyethylene glycol diglycidyl ether and sorbitol polyglycidyl ether; a blocked polyisocyanate such as bisulfite-blocked polyisocyanate; a polymethylol such as methylol melamine and methylol urea; a poly aziridilated compound such as diaziridilated polyethylene oxide; and aldehydes such as glyoxal and furfural are listed. Among these various organic cross-linking agents, the epoxy compound is preferred from the viewpoint of resistance to solubility in water. Representative examples of the epoxy compounds are sorbitol polyglycidyl ether, glycerol polyglycidyl ether, diglycerol polyglycidyl ether, polyglycerol polyglycydil ether, trimethylol propane polyglycidyl ether, ethyleneglycol diglycydyl ether, polyethylene glycol diglycydil ether, propylene glycol diglycydil ether, polypropylene glycol diglycydil ether, ethylene oxide-containing phenol-based glycydil ether, ethylene-oxide containing lauryl alcohol-based glycydil ether and bisphenol-type epoxy resin.

The molecular weight of the post-cross-linked hydrophilic polymer is usually in the range of from one thousand to five million, preferably from ten thousand to three million, more preferably from twenty thousand to two million.

The metal compound (c), which is an essential component of the hydrophilization agent and the hydrophilization liquid of the present invention, plays the role of inhibitor, which suppresses the progress of corrosion under various circumstances. Improved corrosion resistance can be ensured for a long period of time by means of incorporating the metal compound in the hydrophilizing film. Such metal compound is not limited to a particular kind, provided that it is at least one compound, which contains a metal selected from the group consisting of Ti, V, Cr, Mn, Co, Zn, Zr, Mo, Ce and W. The metal compound may be oxide, hydroxide, fluoride. chloride, carbonate, nitrate, sulfate, nitrate, acetate, phosphate and organic substance.

As the titanium compound, titanium oxide, titanium hydrofluoride, and its salt (potassium salt, ammonium salt and the like), titanium sulfate and its salt (potassium, ammonium salts and the like), titanyl sulfate, titanium acetylacetonate, titanium acetyl acetonate, titanium tetracetyl acetonate, titanium lactate, and titanium triethanol aminate and the like are listed.

As the vanadium compound, vanadium pentoxide, metavanadinate (sodium, potassium, ammonium salts and the like), vanadium pentafluoride, vanadyl sulfate, vanadium acetylacetonate, vanadyl acetylacetonate and the like are listed.

As the chromium compound, chromium oxide, bichromic acid and its salt (sodium, potassium, ammonium salts and the like), chromium fluoride, chromium carbonate, chromium nitrate, chromium sulfate, chromium phosphate, chromium biphosphate, chromium acetylacetonate, and the like are listed.

As the manganese compound, manganese oxide, manganate (sodium, potassium salts and the like), permanganic acid and its salt (sodium, potassium, calcium, barium, lithium salts and the like), manganese carbonate, manganese nitrate, manganese phosphate, manganese hydrophosphate, manganese acetylacetonate and the like are listed.

As the cobalt compound, cobalt oxide, cobalt hydroxide, cobalt carbonate, cobalt nitrate, cobalt sulfate and its salt (potassium, ammonium salts and the like), cobalt phosphate, cobalt pyrophosphate, cobalt acetylacetonate and the like are listed.

As the zinc compound, zinc oxide, zinc hydroxide, zinc carbonate, zinc nitrate, zinc sulfate and its salt (potassium, ammonium salts and the like), zinc phosphate, zinc hydrogen phosphate, zinc acetylacetonate and the like are listed.

As the zirconium compound, zirconium oxide, zirconium hydroxide, zirconium hydrofluoric acid and its salt (potassium, ammonium salts and the like), zirconium oxychloride, zirconium hydroxy-chloride, ammonium zirconium carbonate, potassium zirconium carbonate, zirconium sulfate, zirconium nitrate, zirconium acetate, zirconium phosphate, zirconium sodium phosphate, zirconium propyonate, zirconium monoacetylacetonate, zirconium bisacetylacetonate, zirconium tetracetylacetonate. zirconium acetyalacetonate bisethylacetoacetonate. zirconium acetate, zirconyl stearate, zirconyl octylate and the like are listed.

As the molybdenum compound, molybdenum oxide, molybdenic oxide and its salt (sodium, potassium, magnesium, ammonium salts and the like), molybdenyl acetylacetonate and the like are listed.

As the cerium compound, cerium oxide, cerium hydroxide, cerium chloride, cerium carbonate, dibasic cerium sulfate and its salt, cerium acetate, cerium acetate dibasic ammonium, cerium acetate, cerium phosphate, cerium octylate, cerium acetylacetonate and the like are listed.

As the tungsten compound, tungsten oxide, tungstic acid and its salt (sodium, potassium, magnesium, ammonium salts and the like) are listed.

In addition, a complex compound of these metals. for example, zinc bichromate, zinc permanganate, cobalt tungstate, cerium tungstate and the like, and pigments, which are mixture of oxides, can be used.

An anti-bacteria agent and/or anti-mildew agent are preferably added into the hydrophilization agent and hydrophilization liquid of the present invention, provided that the effects of the agent or liquid are not impeded. By this addition, the putrefaction odor due to propagation of bacteria, mildew and yeast, can be prevented. Preferably, the anti-bacteria/mildew agent usable in the present invention is such that can resist, during the dying step, after depositing the hydrophilization agent or hydrophilization liquid, the heating for removal of water, which is a solvent of the treatment agent or treatment liquid. That is, the decomposition temperature of the anti-bacteria/mildew agent is approximately 100°C or higher.

As such anti-bacteria and/or mildew agent, for example, 5-chloro-2-methyl-4-isothiazoline-3-on, 2-methyl-4-isothiazoline-3-on, 2-(4-thiocyano-methylthio) benzothiazole, 2,2-dibromo-3-nitrilopropyon amide, sodium ethylene bis(dithiocarbamate), sodium-2-pyridionethiol-1-oxide, zinc-2-pyridinethiol-1-oxide, 2,2'-dithiobis (pyridine-1-oxide), 2, 4, 5, 6-tetrachloro isophthalonitorile, 2-methyl carbonyl aminobenzilmidazole, 2, 3, 5, 6-tetrachloro-4-(methylsulfonyl)-pyridine, 2-(4-thyazolyl)-benzimidazolo, N-(fluorodichloromethyl thio) sulfamide, p-chloro-m-xylenol, dehydroacetic acid, o-phenylphenol, 1,2-benzisothiazoline-3-on, 1,2-benzisothyazoline barium, diiodemethyl-p-toluenesulfone, 2-n-octyl-4-isothyazaoline-3-on, 10, 10' oxybisphenoxyarsine, 1,2-dibromo-2,4-dicyanobutane, 2-bromo-2-nitropropane-diol, p-oxypropyl benzonate, p-oxybenzonate butyl, 3-iode-2-propylbutyl carbamates, 1, 3-dimethylol-5, 5''-dimethylhidantoin, 1 or 3-monomethylol-5-, 5'-dimethylhidantoin, and various inorganic anti-bacteria agents, such as Ag-based agents, are listed.

The addition amount of the anti-bacteria and/or mildew agent is preferably 0.1 ~ 30% by weight, more preferably 1 ~ 20% by weight, relative to 100 parts by weight of the total weight of the components (a), (b) and (c). When the addition amount is less than 0.1% by weight, the hydrophilic film formed does not satisfactorily exhibit the anti-bacterial resistance and the anti-mildew resistance. On the other hand, when the addition amount exceeds 30% by weight, its effects saturate and the cost of the treating agent and the treating liquid increases and is hence economically impractical.

If necessary to further improve the lubricating property of the film formed by using the hydrophilization agent and the hydrophilization liquid of the present invention, or to improve the depositing wettability of the agent or the liquid on the surface of the metallic material, a surfactant may be added. The surfactant used for this purpose is not limited and may be any one of the nonionic, anionic, cationic, or amphoteric surfactants. However, it is not preferable to use a surfactant having an ionic property opposite to that of the components (a), (b) and (c) used in combination with the surfactant, since the stability of the treating agent or the treating liquid may be impeded.

The surfactants capable of adding into the hydrophilization agent or hydrophilization liquid of the present invention are for example: a non-ionic surfactant, such as polyoxyethylene alkylether, e.g. polyoxyethylene 1aurylether and polyoxyethyele stearylether, polyoxyethylene alkylphenylether, e.g., polyoxethylene nonyl- phenlylether, sorbitan fatty acid ester, e.g., a block polymer of oxyethylene and oxypropylene (Pluronic), sorbitan monolaurate and sorbitan monostearate, fatty acid ester of polyoxyethylene, e.g., polyoxyethylene laurate, polyoxyethylene stearate, and polyoxy- ethylene olealate, glycerin fatty acid ester, and polyoxyethylene propylene glycol alkyl phenol ether; an anionic surfactant such as fatty acid salt, e.g., sodium laurate, sodium stearate and sodium olealate, alkyl sulfate, e.g., sodium dodecylsulfate, alkylsulfosuccinate, dialkylsulfosuccinate, alkenylsulfosuccinate and polyoxyethylene alkyl sulfate; cationic surfactant, such as alkylamine salt, e.g., stearylamine acetate, quaternary ammonium salt, e.g., strearyltrimethyl ammonium, alkylbetaine, e.g., lauryl betaine, and amineoxide; and, an amphoteric surfactant such as alkyl aminoproyonate and; alkyl dimethyl betaine. In addition, fluorine-based amphoteric surfactant and silicon-based surfactant are used.

The addition amount of the above-mentioned surfactant is preferably in a range of 0.05 ~ 20% by weight, more preferably 0.1 ~ 10% by weight relative to 100 parts by weight of the total weight of the components (a), (b) and (c) used together. When the addition amount is less than 0.05% by weight, the hydrophilizing film formed does not exhibit satisfactory lubrication property. On the other hand, when the addition amount exceeds 20% by weight, there arises disadvantageously a danger that the adhesiveness of the film and the metallic material is lowered.

In order to control the deposition amount of the film formed, a thickening agent may be added, if necessary, into the hydrophilization agent and the hydrophilization liquid of the present invention. The thickening agent used for this purpose is sodium salt, potassium salt and ammonium salt of hydroxyethyl cellulose and carboxymethyl cellulose, and a copolymer of vinyl acetate and polyethylene glycol, polyvinyl pyrrolidone, vinyl pyrrolidone, and polyvinyl alcohol, which is, a partially-saponified polyvinyl acetate resin.

The addition amount of the thickening agent mentioned above is preferably 0.5 ~ 50 % by weight, more preferably 3 ~ 30 % by weight relative to 100 parts by weight of the total weight of the components (a), (b) and (c) used together with the thickening agent. When the addition amount is less than 0.5 % by weight, it is difficult to form a thick hydrophilizing film layer. On the other hand, when the addition amount exceeds 50 % by weight, the viscosity of the hydrophilization agent or the hydrophilization liquid is so high that the operability is lowered disadvantageously.

In the hydrophilization agent of the present invention, it is preferable to blend the organic cross-linking agent (b) and metal compound (c) mentioned above with the hydrophilic polymer (a) mentioned above at a weight ratio of 0.1 ~ 200 parts by weight of (b) and 1 ~ 200 parts by weight of (c) relative to 100 parts by weight of (a). More preferably, 11 ~ 100 parts by weight of the organic cross-linking agent (b) and 5 ~ 100 parts by weight of metal compound (c) relative to 100 parts by weight of the hydrophilic polymer (a). When the blending weight ratio of the organic cross-linking agent (b) is less than 0.1 part by weight, the resistance of the formed film to solubility in water is unsatisfactory. On the other hand, when the blending weight ratio exceeds 200 parts by weight, the hydrophilicity and flexibility of the film are disadvantageously lowered. In addition, when the blending weight ratio of the metal compound (c) is less than 1 part by weight, the hydrophilicity of the film formed is unsatisfactory. On the other hand, when the blending weight ratio exceeds 200 parts by weight, there is a danger that a problem of offensive odor arises and flexibility of the film is lowered.

In the hydrophilization treating liquid of the present invention, the hydrophilization agent mentioned above is contained preferably at a concentration of 1 ~ 100 g/L, more preferably in a concentration range of 5 ~ 50 g/L. When the concentration is less than 1 g/L, it is difficult to ensure such film thickness as to demonstrate such functions as the hydrophilicity, corrosion resistance and the like. On the other hand, when the concentration exceeds 100 g/L, its effects saturate and it is economically impractical.

The solvent of the hydrophilization agent and hydrophilization liquid of the present invention is mainly composed of water. There is no problem at all in the additional use of a water-soluble solvent such as various alcohols, ethers, ketones and glycols so as to adjust and improve the drying speed. In addition, one or more of a rustproof agent, leveling agent, filler, colorant, anti-foamer may be added into the hydrophilization agent or hydrophilization liquid of the present invention, in a range where neither the gist of the present invention nor the film properties are impaired.

The hydrophilization agent is used as is, or as the surface-treatment liquid, in which the agent is diluted with water. The concentration and the viscosity of the treatment liquid are adjusted appropriately to meet the application method on the surface of, metallic material, the targeted thickness of the film and the like.

A method for depositing the hydrophilization agent or hydrophilization liquid on the surface of metallic material is not particularly limited, and may be any one of the application methods with a roll coater, brush and the like, dipping method, flow-coat method, injection method, and spraying method. The contact time at the deposition on the surface of metallic material is not particularly limited.

The drying method after depositing the hydrophilization agent or hydrophilization liquid of the present invention is not particularly limited. Usually, it is preferable to use a hot-blast oven and the like and to dry in a temperature range of 50 ~ 300°C, more preferably 100 ~ 250°C. When the drying temperature is less than 50°C, the film formation does not advance satisfactorily, so that corrosion resistance and resistance of the film formed to solubility in water are poor. On the other hand, when the drying temperature exceeds 300°C, there is a danger that a problem of hydrophilicity and offensive odor arises.

Preferably, the post-drying thickness of the hydrophilic film formed by using the hydrophilization agent and hydrophilization liquid of the present invention is within a range of 0.05 ~ 5 $\mu$m, more preferably 0.1 ~ 2 $\mu$m. When the film thickness is less than 0.05 $\mu$m, it is difficult to impart satisfactory hydrophilicity. On the other hand, when the film thickness exceeds 5 $\mu$m, there is a possibility that the heat conductivity is inappropriately lowered.

In the hydrophilization method of the present invention, the surface of the metallic material is degreased and washed, or pre-treated by chemical conversion and the like for the purpose of enhancing the corrosion resistance and the like. Subsequently, the hydrophilization agent and the hydrophilization liquid are deposited on the surface of the metallic material and are heated and dried so as to form a hydrophilizing film. As the chemical conversion treatment for enhancing the corrosion resistance, anodic oxidation treatment, boemite treatment, chromate phosphatizing, chromic chromate treatment, and various non-chromate treatments (zirconium-based, titanium-based, vanadium-based, cerium-based, zinc phosphate-based, silane-coupling based, resin-based and the like) are listed.

Best Mode for Carrying Out Invention

Examples as well as Comparative Examples are shown hereinbelow. The effects of the hydrophilization agent, hydrophilization liquid and the hydrophilization method of the present invention are more specifically described. However, the scope of the present invention is not limited by these examples.

[Test Samples]

An aluminum-alloy sheet (JIS-3004, dimension 70mm $\times$ 150mm, sheet thickness- 0.12 mm) was used.

[Treatment Condition]

A hydrophilization-treated sheet was manufactured by means of treatment in the following sequence of processes: [1] → [2] → [3] → [4] → [5] → [6] → [7] → [8]

    [1] Degreasing (65°C, 2 minutes, dipping method)
      Aqueous solution of commercially available alkaline detergent agent (registered trademark, Fine Cleaner 315, product of Nihon Parkerizing Co., Ltd., 3% solution)
    [2] Water Washing (normal temperature, 30 seconds, spraying method)
    [3] Chemical Conversion Treatment (40°C, 1 minute, dipping method)

Aqueous solution of commercially available chromate phosphate chemical conversion treatment agent (mixed solution of 4 % of registered trademark, Alchrome K702SL and 0.3% of registered trademark Alchrome K702AC, both the products of Nihon Parkerizing Co., Ltd.) was used to form a chromate phosphate film (Cr depositing amount - 50 ~ 60 $mg/m^2$) on the aluminum-alloy sheet.

[4] Water Washing (normal temperature, 30 seconds, spraying method)

[5] Washing with Deionized Water (normal temperature, 30 seconds, spraying method)

[6] Hydro-extracting drying (50°C, 3 minutes, drying in a hot-blast oven)

[7] Hydrophilization Treatment

The total content of the non-volatile matter of the hydrophilization liquid was adjusted to 3%. The so-adjusted hydrophilization liquid was applied on the sheet, which was treated by the chromate-phosphatizing mentioned above, by means of a bar coater No. 10 (thickness of the hydrophilizing film after heating and drying is 0.4 ~ 0.5 µm). The hydrophilization agent was prepared by using the components and additives mentioned above. The composition of the hydrophilization liquid is shown in Table 1 (Examples 1 - 10) and Table 2 (Comparative Examples 1 - 7)

[8] Heating and Drying (150°C, 10 minutes, a hot-blast drier)

(a) Hydrophilic Polymer

① Copolymer of NVA/sodium acrylate = 30/70 (weight ratio)
② Copolymer of NVA/acrylic acid = 60/40 (weight ratio)
③ Copolymer of NVA/potassium acrylate = 90/10 (weight ratio)
④ Polymer of NVA alone
⑤ Polyacrylic acid
   Remarks: NVA - N-vinylacetamide

(b) Organic Cross-Linking Agent

① Epoxy based (polyethylene glycol diglycidyl ether)
② Block isocyanate based (anionic polyester urethane resin
③ Aldehyde based (glyoxal)

(c) Metal Compound

① Ti based: titanium lactatate
② V based: sodium methavanadinate
③ Cr based: chromium nitrate
④ Mn based: potassium permanganate
⑤ Zn based: zinc phosphate
⑥ Zr based: ammonium zirconium carbonate
⑦ Mo based: molybdenum ammonium
⑧ Ce based: dibasic ammonium cerium nitrate
⑨ W based: sodium tungstate
⑩ Composite based: green pigments produced by Hosokura Chemicals Co., Ltd.(Green 2024) (complex oxide of cobalt, zinc, titanium and nickel)

(d) Additive

(Anti-Bacteria Agent)
① Zinc-2-pyridinethiol-1-oxide (surfactant)
② Non-ionic surfactant produced by Asahi Denka Industries Co., Ltd.(Adekanol B797) (Surfactant)
(Thickening Agent)
③ Polyvinyl pyrrolidone (polymerization degree - 360)

In Comparative Example 1 of Table 1, the hydrophilic polymer is not a copolymer. The hydrophilic film is formed by a polymer of N-vinylacetamide alone.

In Comparative Example 2, the hydrophilic film is formed by a hydrophilic polymer, which is completely free of a copolymer polymerized by using the N-vinylacetamide.

In Comparative Example 3, the hydrophilic film formed is free of an organic cross-linking agent.

In Comparative Example 4, the hydrophilic film formed is free a metal compound.

Comparative Example 5 is Test No. F8 of Japanese nexamined Patent Publication (kokai) No. 6-116527.

Comparative Example 6 is Example 38 of Japanese Unexamined Patent Publication (kokai) No. 6-322522.

Comparative Example 7 is Example 45 of Japanese Unexamined Patent Publication (kokai)No. 7-102189.

[Evaluation Method]

(1) Hydrophilicity Persistence

The hydrophilization treated sheets mentioned above were immersed in de-ionized water at room temperature for 72 hours. Drying was carried out at 80°C for 5 minutes. The contact angle of water on the hydrophilization treated sheet was measured by FACE contact angle tester (type: CA-P, Product of Kyowa Kaimen Kagaku Co., Ltd.)

The evaluation criterion of the hydrophilicity persistence was as follows.

(Water Contact Angle)

◎ : less than 10°
○ : 10° or more, less than 20°
Δ : 20° or more, less than 30°
✕ : 30° or more

(2) Resistance to Solubility in Water

The hydrophilization treated sheets mentioned above were immersed in de-ionized water at room temperature for 72 hours. Drying was carried out at 80°C for 5 minutes. The weight difference of the hydrophilizing film prior and subsequent to immersion was obtained. The dissolving ratio in water was then obtained by the following formula.

$$\text{Solution Ratio in Water (\%)} = \{(\text{initial weight of film} - \text{weight of film after immersion}/\text{initial weight of film}) \times 100$$

The evaluation criterion of resistance of solubility to water is as follows.

(Ratio of Solution in Water)

◎ : less than 20%
O : 20% or more, less than 35%
Δ : 35% or more, less than 50%
✕ : 50% or more

(3) Corrosion Resistance

The salt-spray test based on JIS-Z-2371 was carried out. After spraying for 240 hours, the state of corrosion generation on the samples was evaluated with the the naked eye. The evaluation criterion of the corrosion resistance is as follows.

(Area ratio of Corrosion)

◎ : less than 10%
○ : 10% or more, less than 30%
Δ : 30% or more, less than 50%

$\times$ :50% or more

(4) Prevention of Offensive odor

The hydrophilization-treated sheets mentioned above were immersed in de-ionized water at room temperature for 72 hours, followed by drying at 80°C for 1 hour and exposure to the water vapor of boiled de-ionized water for approximately 1 second. Offensive odor was quickly smelled and evaluated. Evaluation criterion of the prevention of offensive odor was as follows.

(Sensory Offensive odor)

ⓞ : no appreciable offensive odor at all
○: somewhat appreciable offensive odor
Δ: evidently appreciable offensive odor
$\times$ :very strong appreciable offensive odor

The evaluation results are shown in Table 1 and Table 2.

As is apparent from the evaluation results of Table 1 and Table 2, the hydrophilizing film of Examples 1 through 10, which was formed by using the hydrophilization agent, the hydrophilization liquid and the hydrophilization method of the present invention, exhibits improved hydrophilicity persistence, resistance to solubility in water and corrosion resistance under durability test conditions, and also prevents offensive odor generation. Contrary to this, in the hydrophilic film of Comparative Examples 1 through 7, several properties are unsatisfactory and do not attain the level to satisfy the practically required functions.

Industrial Applicability

As is apparent from the descriptions hereinabove, it became possible that a hydrophilizing film having hydrophilicity persistence, resistance to solubility in water, corrosion resistance, and prevention of offensive odor generation is formed by means of applying the hydrophilization agent, the hydrophilization liquid and the hydrophilization method according to the present invention to metallic material.

Consequently, the hydrophilization agent, the hydrophilization liquid and the hydrophilization method according of the present invention are extremely useful in practice.

Table 1

Composition, Condition and Evaluation Results in Examples 1~10

| | Composition of Hydrophilization Treating Liquid (Components and Blending Weight Parts) | | | | Evaluation Result | | | |
| --- | --- | --- | --- | --- | --- | --- | --- | --- |
| | (a) Hydrophilic polymer | (b) Cross-Linking Agent | (c) Metal Compound | (d) Additive | Hydrophilicity Persistence | Resistance to Solubility in Water | Corrosion Resistance | Prevention of Foreign Odor Generation |
| Example 1 | ① 100 | ② 30 | ③ 20 | ① 10<br>② 3 | ○ | ○ | ◎ | ◎ |
| Example 2 | ③ 100 | ① 10 | ② 10<br>⑧ 10 | — — | ◎ | ○ | ◎ | ◎ |
| Example 3 | ① 100 | ① 150<br>② 20 | ① 100 | ① 10<br>③ 10 | ◎ | ◎ | ○ | ○ |
| Example 4 | ② 50<br>③ 50 | ① 30 | ④ 20<br>⑦ 10<br>⑨ 10 | ② 5 | ◎ | ○ | ○ | ○ |
| Example 5 | ③ 100 | ① 10<br>③ 30 | ⑥ 30 | ② 3<br>③ 20 | ○ | ◎ | ○ | ◎ |
| Example 6 | ② 100 | ① 30 | ③ 50<br>⑤ 20 | ② 3 | ○ | ◎ | ◎ | ○ |
| Example 7 | ③ 100 | ① 3 | ② 50 | ③ 10 | ○ | ○ | ◎ | ◎ |
| Example 8 | ① 30<br>③ 70 | ① 40 | ④ 20<br>⑩ 10 | ② 3 | ◎ | ○ | ◎ | ○ |
| Example 9 | ② 100 | ① 30 | ② 50<br>⑥ 100 | ① 10<br>② 3<br>③ 50 | ○ | ○ | ◎ | ◎ |
| Example 10 | ① 100 | ② 50 | ③ 5 | ② 3 | ○ | ◎ | ○ | ◎ |

Table 2

| Composition, Condition and Evaluation Results in Examples 1 ~ 10 | | | | | | | | | | | |
|---|---|---|---|---|---|---|---|---|---|---|---|
| | Composition of Hydrophilzation Treating Liquid (Components and Blending Weight Parts) | | | | | | | | Evaluation Result | | | |
| | (a) Hydrophilic polymer | | (b) Cross-Linking Agent | | (c) Metal Compound | | (d) Additive | | Hydrophilicity Persistence | Resistance to Solubility in Water | Corrosion Resistance | Prevention of Foreign Odor Generation |
| Comparative Example 1 | ④ | 100 | ① | 30 | ③ ⑤ | 50 20 | ② | 3 | Δ | × | × | Δ |
| Comparative Example 2 | ⑤ | 100 | ② | 30 | ③ | 20 | ② | 3 | Δ | ○ | ○ | ○ |
| Comparative Example 3 | ③ | 100 | - | - | ② | 50 | ② | 3 | Δ | × | Δ | Δ |
| Comparative Example 4 | ② | 100 | ① | 30 | - | - | ② | 3 | ○ | ○ | Δ | ◎ |
| Comparative Example 5 | Test No.F8 of Japanese Unexamined Patent Publication (kokai) No.6-116527 | | | | | | | | ○ | Δ | Δ | Δ |
| Comparative Example 6 | Example 38 of Japanese Unexamined Patent Publication (kokai) No.6-322552 | | | | | | | | Δ | Δ | ○ | ○ |
| Comparative Example 7 | Example 45 of Japanese Unexamined Patent Publication (kokai) No.7-102189 | | | | | | | | Δ | Δ | ○ | ○ |

**Claims**

1. A highly corrosion-resistant hydrophilization agent, **characterized in that** it contains (a) a hydrophilic polymer, that is, a copolymer of N-vinylacetamide and a polymerizable monomer having a COOX group (in the formula, X means hydrogen atom, alkali metal atom or ammonium salt), (b) an organic cross-linking agent, and (c) at least one metal compound selected from Ti, V, Cr, Mn, Co, Zn, Zr, Mo, Ce and W.

2. A hydrophilization agent according to claim 1, wherein the ratio of N-vinylacetamide and a polymerizable monomer having a COOX group (in the formula, X means hydrogen atom, alkali metal atom or ammonium salt) is within a weight ratio of 95 : 5 ~ 20 : 80.

3. A hydrophilization agent according to claim 1, wherein said organic cross-linking agent is an epoxy compound.

4. A hydrophilization agent according to any one of claims 1 through 3, wherein at least one additive selected from the group consisting an anti-bacteria/mildew agent, a surfactant and a thickening agent are contained.

5. A hydrophilization agent according to any one of claims 1 through 3, wherein from 0.1 to 200 parts by weight of the organic cross-linking agent (b) and from 1 to 200 parts by weight of the metal compound (c) are blended at a weight ratio relative to 100 parts by weight of said hydrophilic polymer (a).

6. A highly corrosion-resistant hydrophilization liquid, **characterized in that** it contains, at a concentration of 1 ~ 100 g/L, a hydrophilization agent, which contains (a) a hydrophilic polymer, that is, a copolymer of N-vinylacetamide and a polymerizable monomer having a COOX group (in the formula, X means hydrogen atom, alkali metal atom or ammonium salt), (b) an organic cross-linking agent, and (c) at least one metal compound selected from Ti, V, Cr, Mn, Co, Zn, Zr, Mo, Ce and W..

7. A hydrophilization liquid according to claim 6, wherein the ratio of N-vinylacetamide and a polymerizable monomer having a COOX group (in the formula, X means hydrogen atom, alkali metal atom or ammonium salt) is within a weight ratio of 95 : 5 ~ 20 : 80.

8. A hydrophilization liquid according to claim 6, wherein said organic cross-linking agent is an epoxy compound.

9. A hydrophilization agent according to any one of claims 6 through 8, wherein at least one additive selected from the group consisting of an anti-bacteria/mildew agent, a surfactant and a thickening agent is further contained.

10. A hydrophilization agent according to any one of claims 6 through 8, wherein 0.1 ~ 200 parts by weight of the organic cross-linking agent (b) and 1 ~ 200 parts by weight of the metal compound (c) are blended at a weight ratio relative to 100 parts by weight of said hydrophilic polymer (a).

11. A highly corrosion-resistant hydrophilization method, **characterized in that** a hydrophilization agent, which contains (a) a hydrophilic polymer, that is, a copolymer of N-vinylacetamide and a polymerizable monomer having a COOX group (in the formula, X means hydrogen atom, alkali metal atom or ammonium salt), (b) an organic cross-linking agent, and (c) at least one metal compound selected from Ti, V, Cr, Mn, Co, Zn, Zr, Mo, Ce and W, is deposited on the surface of metallic material, and is dried to form a hydrophilizing film.

12. A hydrophilization method according to claim 11, wherein the ratio of N-vinylacetamide and a polymerizable monomer having a COOX group (in the formula, X means hydrogen atom, alkali metal atom or ammonium salt) is within a weight ratio of 95 : 5 ~ 20:80.

13. A hydrophilization method according to claim 11, wherein said organic cross-linking agent is an epoxy compound.

14. A hydrophilization method according to any one of claims 11 through 13, wherein at least one additive selected from the group consisting of an anti-bacteria/mildew agent, a surfactant and a thickening agent is further contained, in the hydrophilization agent.

15. A hydrophilization agent according to any one of claims 11 through 14, wherein 0.1 ~ 200 parts by weight of the organic cross-linking agent (b) and from 1 to 200 parts by weight of the metal compound (c) are blended at a weight ratio relative to 100 parts by weight of said hydrophilic polymer (a).

16. A highly corrosion-resistant hydrophilization method, **characterized in that** a hydrophilization liquid, which contains, at a concentration of from 1 to 100 g/L, a hydrophilization agent, containing (a) a hydrophilic polymer, that is, a copolymer of N-vinylacetamide and a polymerizable monomer having a COOX group (in the formula, X means hydrogen atom, alkali metal atom or ammonium salt), (b) an organic cross-linking agent, and (c) at least one metal compound selected from Ti, V, Cr, Mn, Co, Zn, Zr, Mo, Ce and W, is deposited on the surface of metallic material, and is dried to form a hydrophilizing film.

17. A hydrophilization method according to claim 16, wherein the ratio of N-vinylacetamide and the polymerizable monomer having a COOX group (in the formula, X means hydrogen atom, alkali metal atom or ammonium salt) is within a weight ratio of 95 : 5 ~ 20 : 80.

18. A hydrophilization method according to claim 16, wherein said organic cross-linking agent is an epoxy compound.

19. A hydrophilization method according to any one of claims 16 through 18, wherein at least one additive selected from the group consisting of an anti-bacteria/mildew agent, a surfactant and a thickening agent is further contained in the hydrophilization agent.

20. A hydrophilization agent according to any one of claims 16 through 18, wherein 0.1 ~ 200 parts by weight of the organic binder (b) and 1 ~ 200 parts by weight of the metal compound (c) are blended at a weight ratio relative to 100 parts by weight of said hydrophilic polymer (a).

<div align="center">

**INTERNATIONAL SEARCH REPORT**

</div>

| International application No. |
| --- |
| PCT/JP01/00196 |

| A. CLASSIFICATION OF SUBJECT MATTER |
| --- |
| Int.Cl$^7$    C09K3/18, C09K3/00, C09D5/00, C09D139/00 C09D163/00 |

According to International Patent Classification (IPC) or to both national classification and IPC

| B.   FIELDS SEARCHED |
| --- |
| Minimum documentation searched (classification system followed by classification symbols) Int.Cl$^7$    C09K3/18, C09K3/00, C09D5/00, C09D139/00 C09D163/00 |

Documentation searched other than minimum documentation to the extent that such documents are included in the fields searched

Electronic data base consulted during the international search (name of data base and, where practicable, search terms used)
WPI (DIALOG)

| C.   DOCUMENTS CONSIDERED TO BE RELEVANT |
| --- |

| Category* | Citation of document, with indication, where appropriate, of the relevant passages | Relevant to claim No. |
| --- | --- | --- |
| A | GB, 2295828, A (Nihon Parkerizing Co., Ltd.), 12 June, 1996 (12.06.96), abstract; Claims 1,14; page 11, lines 18 to 28 & JP, 8-232078, A   & FR, 2727879, A1 & KR, 179686, B1 | 1-20 |
| A | WO, 97/00301, A1 (HOECHST INDUSTRY LIMITED), 03 January, 1997 (03.01.97), Claims 1,3 & JP, 9-3439, A | 1-20 |
| A | JP, 8-291269, A (The Furukawa Electric Co., Ltd.), 05 November, 1996 (05.11.96), abstract; Claims   (Family: none) | 1-20 |
| A | JP, 55-54366, A (Sakai Chemical Industry Co., Ltd.), 21 April, 1980 (21.04.80), Claims; page 3, lower left column, line 12 to lower right column, line 7   (Family: none) | 1-20 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 09 April, 2001 (09.04.01) | Date of mailing of the international search report 24 April, 2001 (24.04.01) |
| --- | --- |
| Name and mailing address of the ISA/ Japanese Patent Office | Authorized officer |
| Facsimile No. | Telephone No. |

Form PCT/ISA/210 (second sheet) (July 1992)